Europäisches Patentamt

**European Patent Office**

Office européen des brevets

(19)

(11) Publication number: **0 040 336**
**B1**

(12) **EUROPEAN PATENT SPECIFICATION**

(45) Date of publication of patent specification: **27.06.84**

(21) Application number: **81103242.4**

(22) Date of filing: **29.04.81**

(51) Int. Cl.³: **E 06 B 7/22, B 29 H 7/00, B 29 H 9/10, B 60 J 1/00, E 06 B 3/62**

(54) Sealing strip.

(30) Priority: **29.04.80 IT 2168680**

(43) Date of publication of application:
**25.11.81 Bulletin 81/47**

(45) Publication of the grant of the patent:
**27.06.84 Bulletin 84/26**

(84) Designated Contracting States:
**BE DE FR GB NL**

(56) References cited:
**DE - A - 2 355 806**
**DE - B - 1 209 447**
**FR - A - 2 090 213**
**US - A - 3 387 416**
**US - A - 3 972 973**

(73) Proprietor: **SMAE-SOCIETA' MERIDIONALE ACCESSORI ELASTOMERICI S.p.A Agglomerato Industriale Battipaglia (Salerno) (IT)**

(72) Inventor: **Perini, Valerio, Via Piave Palazzo Santese Battipaglia (Salerno) (IT)**

(74) Representative: **Gernhardt, Claus, Dipl.-Ing. Dr. Elisabeth Jung Dr. Jürgen Schirdewahn Dipl.-Ing. Claus Gernhardt Patentanwälte Clemensstrasse 30 D-8000 München 40 (DE)**

Courier Press, Leamington Spa, England.

# 0 040 336

## Description

The present invention refers to a sealing strip particularly for covering the edges of vehicle openings, in particular of motorvehicle openings, able to firmly anchor itself to the edges of said openings and to guarantee a seal when said openings are occupied by the element inserted into them, as for example a door, glass and the like.

Different types of sealing strips for covering the edges of motorvehicle openings are known; said types of sealing strips differ from one another for the type of motorvehicle or for the type of opening into which they must be inserted.

Although differing from one another, the various types of known sealing strips for covering edges of vehicle openings all comprise a first portion which is necessary for being anchored to the edges of the opening and a second portion which must provide a seal with the element of the motorvehicle to be inserted into the opening.

The two portions into which a sealing strip for covering the edges of motorvehicle openings can be ideally divided, accomplish different functions and therefore the properties of said portions must be different.

More particularly, whilst the above cited second portion, having to accomplish a sealing function, must be elastically deformable in the highest degree, the first portion, entrusted with the function of ensuring a mechanical anchorage, must be rigid when installed, but it must also be permanently deformable in order to be able to adapt itself to any shape of the opening contour.

In one known sealing strip for covering the edges of motorvehicle openings, described in DE—A—2 355 806, the first portion has generally a U-shaped section and consists of elastomeric material, said first portion is provided with an embedded sheet iron having notches, said sheet iron with its presence confers to the second portion a rigidity and a permanent bending deformation at points of the notched sheet iron in order to permit the shaped article to follow any contour of a motorvehicle opening.

It is evident that from the presence of two elements so different from each other in the first portion of a sealing strip for covering the edges of motorvehicle openings, great problems arise which cannot be solved by the sealing strips of known type.

A first problem is to guarantee a perfect bond between the sheet iron and the elastomeric material embedding it, in order not to reach, during the permanent deformation of said portion or strip the separation of said two elements from each other and therefore the breaking of the sealing strip.

A second problem is connected to the necessity of having a smooth surface also for the said first portion of the sealing strip without having to resort to great thicknesses for it.

A third problem is due to the high weight of the sealing strip due to the presence of a metallic element, as the sheet iron which owing to a cause beyond control results to be heavy for the nature of the material constituting it.

A fourth problem is due to the necessity that no looseness occurs in the course of the time in the connection between the sealing strip and the edges of the motorvehicle opening due to a failing of the configuration of the sheet iron under the action of the fatigue stresses due to the continuous bumps that take place when the element which closes the opening, for example a door, is placed into contact with and drawn away from said opening.

The known sealing strips for covering sides of motorvehicle openings as previously said, are not able to solve the above mentioned problems.

Furthermore, in DE—B—1 209 447 there is shown a sealing strip in form of a band for windows of motorvehicles, which consists at least partly, of two elastic portions, the first of which is intended to be anchored to the edge of the window opening and presents walls which receive the edges of the glass sheet and which are formed of a material softer than that of the remainder of said first portion. The second portion consists of a relatively soft material and is received within a cavity of the first portion. The said known sealing strip is difficult to manufacture particularly due to the different rigidities or elasticities which the first portion shall have in different zones thereof. There is furthermore, a limitation with respect to the rigidity of that zone of the first portion in which the first portion shall be anchored to the edge of the window opening.

The present invention aims to solve the unsolved problems in the sealing strip field, by means of a sealing strip which has one portion apt to assure the mechanical anchorage with the edges of a motorvehicle opening, which is light, which has a small thickness, which has a very smooth outer surface, which has no problems in getting deformed permanently to follow any path of the contour of an opening even if said path has zones with very small bending radii and which guarantees in the course of even a very long time a sure and constant seal with the edges of the motorvehicle opening.

According to the invention there is provided a sealing strip particularly for covering the edges of vehicle openings, in particular motorvehicle openings, comprising a first pair of generally U-shaped portions suitable to be anchored to the edge of the opening, and a second portion having a sealing function, characterized by the fact that the first pair of portions each comprises a part of a mixture of plastics and elastomeric materials having a U-shaped cross section, said parts being placed

2

symmetrically side by side and parallel one to the other, and being connected at the ends of their inner flanges facing each other by the second portion which comprises a band of elastometic material.

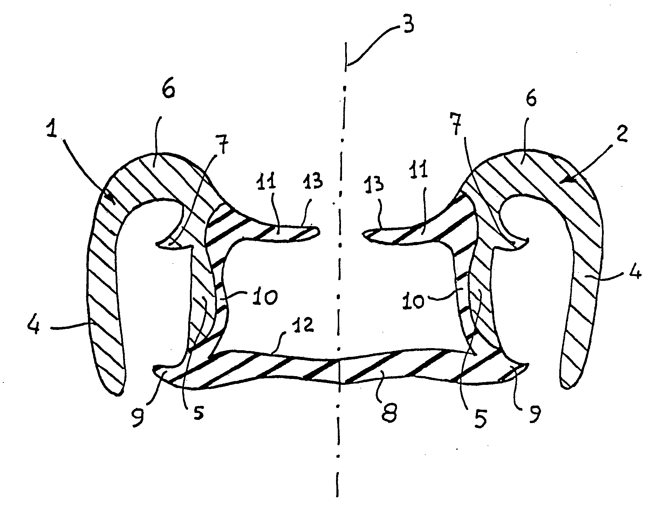

The present invention will be better understood by the following detailed description made by way of non-limiting example with reference to the figure of the enclosed sheet of drawing, which represents a section view of a particular sealing strip according to the present invention.

In its more general aspects, a sealing strip comprises at least a pair of first portions, suitable to guarantee the anchorage to the edges of a motorvehicle opening, each made of a mixture of plastics and elastomeric materials and having generally in section perpendicular to its own greater development a U shape, and a second portion made completely of elastomeric material suitable to guarantee the seal in the area of contact between the edges of the opening and the motorvehicle element (door, glass etc.) suitable to close the opening itself.

More particularly, according to its more general aspects, the mixture of elastomeric material and of plastics material forming the first portions of the shaped article is a mixture based on a styrene polymer EPDM terpolymer, natural rubber and phenolic resin.

The essential characteristics according to the present invention, which can be obtained by means of the above reported compound, is that of having the sealing strip constituted by a mass of plastics material provided with cells and enclosing in said cells an elastomeric material. In this way the sealing strip results ideally constituted by a plurality of double layers as explained hereinafter.

Among the various possible compounds for the formation of the first portion of the sealing strip having as base the above reported substances, the mixture reported herebelow is particularly suitable, where the components are expressed as parts by weight:

|  | parts by weight |
|---|---|
| natural rubber | 15 |
| EPDM of high unsaturation | 20 |
| SBR polymer of high styrene content | 65 |
| phenolic resin | 12 |
| zinc oxide | 5 |
| stearin | 1 |
| alkylate oil | 25 |
| carbon black N 550 | 85 |
| calcium oxide | 12 |
| sulphur | 5 |
| accelerators | 1.3 |
| tellurium diethyldithiocarbamate | 0.4 |
| retardant | 0.2 |

The above reported mixture by which the portion of the shaped article suitable to act as an element for mechanical anchoring the shaped article on the edges of a vehicle opening, is produced by extrusion and is able to originate with the extrusion and after the vulcanization of the elastomeric material present therein, the particular structure being in the form of a mass provided with cells, previously described.

The above reported mixture after extrusion and vulcanization of the elastomeric material has in cold conditions, and in general at the temperatures encountered in the field of strips for cars and i.e. at temperatures not higher than 90°C an elastic behaviour, whilst at higher temperatures, the cross-linked compound in question is plastically deformable, i.e. after having been subjected to stresses, said mixture gets deformed permanently and after cooling, the imposed deformation is stabilized and the properties of elastic deformation are recovered.

The figure of the enclosed sheet of drawing represents a sealing strip according to the present invention. Said sealing strip is suitable for covering the edges of a motorvehicle opening apt to receive the edge of a sliding glass, as for example the opening present in a door for motorvehicles.

As shown in the figure, the sealing strip comprises two parts 1 and 2 having in the section perpendicular to their longitudinal development a substantially U shape, said parts 1, 2 are parallel to each other and have a mirror symmetric shape with respect to the plane of symmetry of the sealing strip that in the figure is shown by the dash and dot line 3. The parts 1 and 2 form together the first portion of the strip.

Each part 1 and 2 has therefore two flanges 4 and 5 and a web 6. In correspondence of the flange 5 there is a rib 7 projecting toward the cavity of the U shape and more particularly the rib 7 is borne or carried by the flange 5.

The two parts 1 and 2 are connected to each other by a band 8 which connects said parts 1 and 2 to each other in correspondence of the ends of the flanges 5 and moreover forms ribs 9 on the ends of the flanges 5 projecting toward the flanges 4 of said parts 1 and 2.

The two parts 1 and 2 are formed by the compound of elastomeric material and plastics material previously described, while the band 8 is completely of elastomeric material of a type per se known to a

3

technician of the field for being used for strips for covering the edges of motorvehicles openings and of which a formula will be given hereinafter by way of example.

From the lateral end of the band 8, where this latter joins with the ends of the flanges 5 of the parts 1 and 2, strips 10 depart which are in direct contact with the sidewalls of the flanges 5. Said strips 10 have in correspondence of the zones where they are near the web 6 of the parts 1 and 2, fins 11 facing the one to the other.

Moreover, flocking can be applied onto the face 12 of the band 8 and of the surfaces 13 of the fins 11.

The parts 8 to 11 form the second portion.

As previously said, the band 8 is of elastomeric material of a type known per se for being used in strips for covering the edges of motorvehicle openings and the ribs 9, the strips 10 and the fins 11 are of the same elastomeric material.

Now, by way of example a mixture of elastomeric material for the formation of the just cited elements 8, 9, 10 and 11 is given below.

### Example

|  | parts by weight |
|---|---|
| EPDM | 100 |
| zinc oxide | 5 |
| stearin | 1 |
| carbon black N 550 | 110 |
| paraffin oil | 45 |
| accelerators | 2.5 |
| sulphur | 1.6 |
| calcium oxide | 6 |

For the manufacture of the just described sealing strip and in general for the manufacture of all sealing strips lying within the most general idea of solution according to the present invention, the strip is produced by contemporaneous extrusion of the two portions 4 to 7 and 8 to 13 of the shaped article with a single extrusion head and by subsequent vulcanization of the elastomeric material of the shaped article in a manner known per se to a technician of the field.

From the previous description it is easy to understand how by means of a sealing strip according to the present invention the proposed aims are achieved.

In fact, the elimination in a sealing strip for covering the edges of motorvehicle openings of the metallic insert embedded in the body of elastomeric material of that portion of the strips whose function is to ensure the mechanical connection of the sealing strip to the edges of the motorvehicle opening, permits first of all to make the sealing strip on the whole with light weight since said metallic insert has a weight that cannot be disregarded, firstly for the nature of the material constituting it and secondly for the necessity of conferring to said metallic insert a certain thickness in order to have a rigidity sufficient to guarantee in the course of even a long time the anchorage of the sealing strip to the edges of the motorvehicle opening.

The elimination of the metallic insert in that portion of the sealing strip suitable to guarantee the mechanical anchorage is made possible by the fact that the portion apt to guarantee said mechanical anchorage has, as previously described, a structure formed by a plastics material mass provided with cells, said cells being filled with elastomeric material. This is obtained by mixing both the plastics material mass and the elastomeric material before extruding them through a single die.

This structure has a great rigidly accompanied by a great elasticity when the strip is installed, as it clearly appears from the consideration described below.

The presence of a plastics material mass provided with cells, said cells being filled with elastomeric material corresponds ideally to a structure formed by a plurality of double layers placed side by side. As double layer it is understood a structure formed by two thin sheets of rigid material kept far from one another by a filler.

Such structure permits a great rigidity to the bending stresses since in each double layer the thin sheets of plastic material, lying at a certain distance from the neutral axis of the structure of which said thin sheets are a part, are subjected under bending action to great stresses in direction perpendicular to their thickness.

Consequently, in this way a very good exploitation of the characteristics of the material constituting said layers is obtained. Moreover, the presence of elastomeric material as a material acting as a spacer in the double layers structure permits to have a great elasticity for said double layers since the elastomeric material being capable of storing a great deformation energy is able to return said energy when the stress that has produced the deformation has stopped acting and therefore to restore its original configuration.

In addition to the just explained properties the double layer structure forming that portion of the strip entrusted with the function of ensuring the mechanical anchorage has the characteristic of being deformed permanently when heated beyond a predetermined temperature and subjected to deformation and of maintaining the deformation given to it after the subsequent cooling, the whole accompanied by the recovery of the rigidity and elasticity properties previously described, in the newly deformed configuration assumed after heating.

In order to understand how it is possible to obtain a permanent deformation by means of the heating at a temperature higher than a given value, we report the following considerations.

By heating the sealing strip beyond a given temperature it is possible to place the plastics material mass provided with cells of the sealing strip in a plastic condition of the plastics material itself, i.e. in a condition in which it does not offer a resistance to stresses.

It follows that subjecting the sealing strip to deformation when the plastics material mass provided with cells is at a plastic state, the shape of said mass can be modified, so that after cooling a stabilization of the new plastics material mass is obtained. From one side this produces the maintenance of the deformed shape of the sealing strip and from the other the recovery by the sealing strip in deformed condition with the rigidity and elasticity properties previously explained.

In this way it is possible to confer to the portion of sealing strip entrusted with the function of ensuring the mechanical connection of the sealing strip itself to the edges of the motorvehicle opening a very thin thickness and to have the surface of said portion of the sealing strip very smooth. This is impossible with sealing strips of known type where the presence of the metallic insert did not permit the use of thin thicknesses and left a trace on the outer surface of the embedded metallic insert.

At last, the elimination of the insert of metallic material in a sealing strip for covering the edges of motorvehicle openings avoids the adhesion problems between elements of different nature and therefore consequent risks of separation between said elements and the possibility of deformations of the strip under fatigue stresses which can alter in the course of time the quality of the mechanical anchorage of the strip to the edges of the motorvehicle opening.

## Claims

1. Sealing strip particularly for covering the edges of vehicle openings, in particular motorvehicle openings, comprising a first pair of generally U-shaped portions (1, 2) suitable to be anchored to the edge of the opening, and a second portion (8 to 13) having a sealing function, characterized by the fact that the first pair of portions (1, 2) each comprise a part of a mixture of plastics and elastomeric materials having a U-shaped cross section, said parts (1, 2) being placed symmetrically side by side and parallel one to the other, and being connected at the ends of their inner flanges (5) facing each other by the second portion which comprises a band (8) of elastomeric material.

2. Sealing strip according to claim 1, characterized in that it comprises fins (11) of elastomeric material facing each other and projecting from the inner flanges (5) towards the outside of the U-shaped parts (1, 2) and ribs (7) projecting from the inner flanges (5) towards the inside of each U-shaped part.

3. Sealing strip according to claim 2, characterized in that it comprises flocking on the surfaces (13) of said fins (11).

4. Sealing strip according to claim 1, characterized in that strips (10) extend from the ends of the band (8), where this latter joins with the ends of the inner flanges (5) of said pair of first parts, said strips being in direct contact with the outer sidewalls of said inner flanges (5).

5. Sealing strip as in claim 1, characterized in that it comprises flocking on the inner surface (12) of said band.

6. Sealing strip as in claim 1, characterized in that the band (8) includes ribs (9) at the ends of said inner flanges (5) projecting towards the outer flanges (4) of said parts (1 and 2).

7. Sealing strip as in claim 1, characterized in that the compound of plastic and elastomeric material for forming the pair of parts (1, 2) comprises a mixture of a mass of plastic material provided with cells (cellular structure) and of an elastomeric material which fills the said cells.

## Patentansprüche

1. Dichtungsleiste, insbesondere zum Abdecken der Kanten von Öffnungen von Fahrzeugen, insbesondere von Öffnungen von Motorfahrzeugen, mit einem ersten Paar von allgemein U-förmigen Teilen (1, 2), die dazu geeignet sind, an der Kante der Offnung verankert zu werden, und mit einem zweiten Teil (8 bis 13), der eine Abdichtfunktion hat, dadurch gekennzeichnet, daß das erste Paar von Teilen (1, 2) jeweils einen Teil aus einem Gemisch aus plastischem und elastomerem Material aufweist mit U-förmigem Querschnitt und daß die Teile (1, 2) symmetrisch Seite an Seite und parallel zueinander angeordnet und an den Enden ihrer inneren, einander zugewandten Flansche (5) durch den zweiten Teil verbunden sind, der ein Band (8) aus elastomerem Material aufweist.

2. Dichtungsleiste nach Anspruch 1, dadurch gekennzeichnet, daß sie Flossen (11) aus elastomerem Material, die einander zugewandt sind und von den inneren Flanschen (5) in Richtung zur Außenseite der U-förmigen Teile (1, 2) vorragen, und Rippen (7) aufweist, die von den inneren Flanschen (5) zur Innenseite jedes U-förmigen Teils vorragen.

3. Dichtungsleiste nach Anspruch 2, dadurch gekennzeichnet, daß sie eine Beflockung an den Flächen (13) der Flossen (11) aufweist.

4. Dichtungsleiste nach Anspruch 1, dadurch gekennzeichnet, daß Streifen (10) sich von den Enden des Bandes (8) erstrecken, wo dieses sich mit den Enden der inneren Flansche (5) des genannten Paares von ersten Teilen trifft, und daß die Streifen sich in direkter Berührung mit den äußeren Seitenwänden der inneren Flansche (5) befinden.

5. Dichtungsleiste nach Anspruch 1, dadurch gekennzeichnet, daß sie an der Innenfläche (12) des Bandes eine Beflockung aufweist.

6. Dichtungsleiste nach Anspruch 1, dadurch gekennzeichnet, daß das Band (8) Rippen (9) an den Enden der genannten inneren Flansche (5) aufweist, die in Richtung gegen die äußeren Flansche (4) der genannten Teile (1, 2) vorragen.

7. Dichtungsleiste nach Anspruch 1, dadurch gekennzeichnet, daß die Masse aus plastischem und elastomerem Material zum Bilden des Paares von Teilen (1, 2) ein Gemisch aus einer Masse aus plastischem Material, das mit Zellen (Zellenstruktur) versehen ist, und aus einem elastomeren Material aufweist, das die Zellen füllt.

**Revendications**

1. Baguette à cacheter, particulièrement pour couvrir les bords des ouvertures de véhicules, particulièrement d'automobiles, comprenant un premier couple de parties (1, 2) ayant en général une structure à "U", adaptées pour être fixées au bord de l'ouverture, et une deuxième partie (8 à 13) ayant un fonction d'étanchéité, caractérisée par le fait que le premier couple de parties (1, 2) comprend une partie constituée par un mélange de matériaux plastique et elastomère avec une section à "U", que les parties (1, 2) son placées symétriquement l'une à côté de l'autre et parallèlement l'une à l'autre et qu'elles sont unies, avec les extrémités de leur flasques internes (5) qui sont opposés l'un à l'autre, par la deuxième partie qui comprend une bande (8) en matériel élastomère.

2. Baguette à cacheter suivant la revendication 1, caractérisée par des ailes (11) en matériel élastomère, opposées l'une à l'autre et projettant des flasques internes (5) vers l'extérieur des parties à "U" (1, 2), et par des nervures (7) projettant des flasques internes (5) vers l'intérieur de chacune des parties à "U".

3. Baguette à cacheter suivant la revendication 2, caractérisée par le fait qu'elle comprend un "flockage" sur les surfaces (13) des ailes (11).

4. Baguette à cacheter suivant la revendication 1, caractérisée par le fait que des bandes (10) s'étendent des extrémités de la bande (8) où celle-ci se joint avec les extrémités des flasques internes (5) dudit couple de premières parties, lesdites bandes étant en contact direct avec les côtes externes des flasques internes (5).

5. Baguette à cacheter suivant la revendication 1, caractérisée par le fait qu'elle comprend un "flockage" sur la surface intérieure (12) de ladite bande.

6. Baguette à cacheter suivant la revendication 1, caractérisée par le fait que la bande (8) comprend des nervures (9) situées aux extrémités des flasques internes (5) et projettant vers les flasques externes (4) des parties citées (1 et 2).

7. Baguette à cacheter suivant la revendication 1, caractérisée par le fait que le composé en plastique et en matériel elastomère servant à former le couple des parties (1, 2) comprend un mélange d'une masse de matériel plastique muni de cellules (structure cellulaire) et d'un matériel elastomère qui remplit lesdites cellules.